# EUROPEAN PATENT APPLICATION

(11) **EP 1 202 489 A2**
(43) Date of publication of application: **02.05.2002**
(21) Application number: 01124430.8
(22) Date of filing: 11.10.2001
(51) Int. Cl.: H04L 12/18

(54) **Classified on-line chat**

(30) Priority: 23.10.2000 GB 0025911
(71) Applicant: Amacis Limited, Belfast, Northern Ireland (GB)
(72) Inventor: McErlean, Patrick, Portglenone, County Antrim (GB)
(74) Representative: O'Connell, Maura, Dr.

(57) **Abstract**

The invention relates to a control module for use in a computer chat system which includes one or more customer chat clients; one or more agent chat clients; and a chat server arranged to establish an on-line conference between at least one customer chat client and at least one agent chat client, by which conference said chat clients may exchange messages for rendering to respective client users. The control module is arranged so that messages received from customers are classified to determine the nature of the message and are then allocated to an agent who has the skill or capability to deal with at least part of the message. Further queries made by the customer in the same chat session also undergo classification and may be allocated to a different agent. The preferred arrangement is such that a change from one agent to another is seamless from the point of view of the customer.

## Description

### FIELD OF THE INVENTION

The present invention relates to network conferencing and in particular to on-line network chat.

### BACKGROUND TO THE INVENTION

On-line network chat, or real-time computer chat, is well known and typically involves communication amongst two or more client computers across a computer network via a conference, or chat room. When a chat session is established in chat room, messages sent from a client computer that is party to the chat session are sent to all other clients that are party to the session. The distribution of messages amongst the participating clients takes place substantially in real-time thereby giving the users of the client computers a sense of real-time communication with others.

Many organisations offer chat room facilities to their customers so that the customers can communicate with representatives, or agents, of the organisation in order to, for example, seek information about the organisation or it's products/services. Conventionally, the organisation provides a number of agents (normally human agents) for dealing with customer queries. A customer submits his message to a chat server whereupon a chat session is initiated. The chat server allocates the received message to the next available agent who then joins the chat session and attempts to deal with the customer's query or queries.

A problem with this arrangement is that the agent to which a particular customer message is allocated may not be able to deal with the customer's query. This situation is particularly likely in cases where the organisation provides a diverse range of products and services in respect of which the customer has a query. Further, the customer may submit a number of different queries within a single chat session and this increases the likelihood that the allocated agent will be unable to deal with one or more of the queries. Clearly this is undesirable as it may lead to frustration on the part of the customer and possibly loss of business.

### SUMMARY OF THE INVENTION

In accordance with a preferred embodiment of the present invention messages received from customers by a chat server are classified to determine the nature of the message and are then allocated to an agent who has the skill or capability to deal with at least part of the message. Further queries made by the customer in the same chat session also undergo classification and may be allocated to a different agent. The preferred arrangement is such that a change from one agent to another is seamless from the point of view of the customer.

Accordingly, a first aspect of the invention provides a control module for use in a computer chat system which includes one or more first chat clients; one or more second chat clients; and a chat server arranged to establish an on-line conference between a first chat client and at least one second chat client, by which conference said chat clients may exchange messages for rendering to respective client users, the control module being arranged to participate in said conference in order to receive messages from said chat clients, wherein upon receipt of a message from a first chat client, the control module is arranged to cause said received message to be analysed in order to determine the nature of the message, and is further arranged to cause a second chat client to be selected depending on said determined nature and to cause said message to be rendered by said selected second chat client.

Preferably, in respect of a first message received from a first chat client, the control module is arranged to cause said selected second chat client to join the conference and, in respect of the, or each, subsequent message received from said first chat client in respect of said conference, the control module is arranged to cause said subsequently received message to be analysed in order to determine the nature of the message, and to cause an alternative second chat client to be selected if the subsequently received message is not suitable for rendering by the currently selected second chat client.

More preferably, the control module is arranged to cause a selected alternative second chat client to join the conference and to cause said selected second chat client to leave the conference.

Preferably, the control module is arranged to cause messages received from said first chat clients to be classified, according to message content, into at least one of a set of message categories, wherein a second chat client is selected depending on the, or each, category into which a message is classified. To this end, the control module is preferably associated with a text analyser arranged to apply a set of one or more rules to the message text in order to produce said at least one message category.

Preferably, each second chat client is associated with one or more message categories such that messages falling into at least one of said one or more message categories are appropriate for rendering by the respective second chat client. More preferably, the or each message category associated with a second chat client are dependant on the skills of the respective client user.

Preferably, the control module is further arranged to receive messages sent from said second chat clients, wherein, upon receipt of a message from a selected client, the control module is arranged to cause said received message to be analysed in order to determine its suitability for rendering by a first chat client and, upon determining that said message is suitable, to cause at least one first chat client to render the message. Preferably, the control module causes the received message to undergo text analysis in order to detect words or phrases that are unsuitable for rendering by said at least one first chat client.

Preferably, the control module is arranged to participate in the on-line conference as a further chat client. More preferably, each message is associated with a first flag for indicating whether or not the associated message is suitable for rendering by a chat client, wherein the control module is arranged to set the first flag to indicate approval for rendering. In the preferred embodiment, the second chat clients are arranged only to render messages so approved. Further preferably, said first chat clients are arranged only to render messages so approved.

Preferably, each message is associated with a second flag arranged to indicate the source the message and wherein the first and second chat clients are arranged only to render messages for which the associated second flag indicates that the message source is a second or first chat client respectively.

The invention further provides a computer chat system incorporating the control module of the first aspect of the invention. The term "computer chat system" is intended to embrace the terms "on-line network communications system" ,"system for real-time communication across a computer network" and "on-line conferencing system". In a particularly preferred embodiment, the first and second chat clients communicate across the Internet or other global computer network.

A further aspect of the invention provides a method of on-line network communications, or a method of real-time communication across a computer network.

Still further aspects of the invention provide a set of one or more computer program products comprising computer usable instructions, or code, for implementing in whole or in part, when executed on a computer or computer system, the computer chat system of the invention, and one or more computer program products comprising computer usable instructions for implementing the component parts of the system, including the control module. The invention also provides a computer program product comprising computer usable instructions for causing a computer to perform the method of the invention. The invention further provides one or more of said computer program products stored on a computer usable medium.

Further aspects and advantages of the invention will become apparent to those ordinarily skilled in the art upon review of the following description and with reference to the accompanying drawings.

### BRIEF DESCRIPTION OF THE DRAWINGS

An embodiment of the invention is now described by way of example and with reference to the accompanying drawings in which:
**Figure 1** is a schematic diagram illustrating an on-line network chat system according to the invention;
**Figure 2a** is a schematic representation of a session storage area included in the system of Figure 2;
**Figure 2b** is a schematic representation of a distributor control table included in the system of Figure 1;
**Figure 2c** is a schematic representation of an agent directory included in the system of Figure 1; and
**Figures 3 to 6b** illustrate, in flow diagram form, the operation of a preferred embodiment of the system of Figure 1.

### DETAILED DESCRIPTION OF THE DRAWINGS

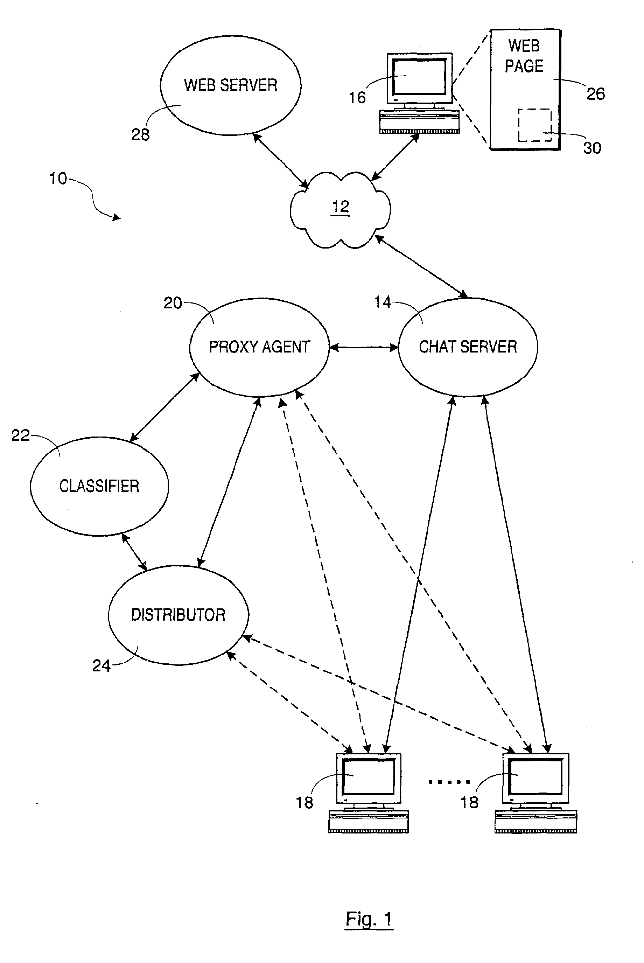

Referring now to Figure 1, there is shown, generally indicated at 10, an on-line network chat, or conferencing, system according to the invention. The system 10, which may also be referred to as a computer chat system or a system for real-time communication across a computer network, is preferably arranged for Web chat i.e. computer chat across the Internet 12, or other global computer network. Equally, however, the system 10 may be arranged to support chat across any computer network, for example LAN, WAN or Intranet.

The system 10 includes a chat server 14, also known as a co-present server. The SAMETIME (Trade Mark) server as provided by Lotus Development Corporation of Cambridge MA, USA, is suitable for use as the chat server 14. The Lotus SAMETIME server is devised to enable chat sessions across the Internet and is sometimes referred to as a Web chat server.

The chat server 14 enables an on-line conference, or chat room, to be established whereby a plurality of client computers can communicate with one another in real-time. Typically communication between clients takes the form of exchanging messages, particularly text messages. In system 10, the chat server 14 enables a conference to be established amongst one or more of a plurality of first, or customer, chat clients 16 (only one shown) and a plurality of second, or agent, chat clients 18 (only two shown) across a computer network such as the Internet 12. The agent chat clients are hereinafter referred to as agent clients 18 and it will be understood that this term embraces the application(s) which, in use, run on an agent client computer to enable communication with the chat server 14, to receive messages from, and render messages to, a user (agent). Conveniently, said agent client application takes the form of a JAVA stand alone module or applet arranged for use with the API (Application Program Interface) of the chat server 14.

The system 10 further includes a control module comprising a proxy agent 20, arranged for communication with the chat server 14 as a client. Proxy agent 20 is conveniently implemented as a CORBA server, or equivalent module, in, for example, the JAVA programming language and its operation is described in more detail below. Also included in the system 10 are a classification module, or classifier 22, and a distribution module, or distributor 24, the respective operations of which are described in more detail below. The classifier 22 and distributor 24 are also conveniently implemented as CORBA, or equivalent, modules written in JAVA.

A customer client 16 may connect with the chat server 14 to establish a chat session in any conventional manner.
In the preferred embodiment illustrated in Figure 10, the customer client 16 connects with the chat server 14 via a Web page 26, for example an HTML page. To this end, the customer client 16 includes a Web browser (not shown). The Web page 26 is available from a Web server 28 in conventional manner. For example, the Web server 28 may host a Web site (not illustrated) operated by the organisation running the system 10, from which Web site the Web page 26 may be downloaded. The Web page 26 includes, or is associated with, an application, conveniently an applet 30 (or customer applet 30), arranged to establish a connection with the chat server 14 and to initiate a chat session. The applet 30 is arranged to make use of a standard API (Application Program Interface) which is exposed by the chat server 14 to enable the instantiation of chat sessions and the exchange of messages between client computers. In particular, the applet 30 is arranged to make use of those API functions which enable the applet 30 to log on and log off the chat server 14; join a chat session; send a message to the chat server 14; and receive a message from the chat server 14. The applet 30 is also arranged to provide a GUI (Graphical User Interface) at the customer client 16, for receiving messages from, and rendering messages to a user (typically a customer), aspects of which are described below.

Conveniently, the chat server 14, proxy agent 20, classifier 22 and distributor 24 all reside at the same site e.g. with an Applications Service Provider (ASP) (not shown). The Web server 28 may also reside at said site but need not necessarily do so. The agent clients 18 are preferably local to said site but need not necessarily be so. The customer clients 16 may be located anywhere on the computer network 12.

In use, a user (not shown) at the customer client 16 causes the client's Web browser to connect with the Web server 28 and to render the Web page 26. Rendering the Web page 26 instantiates applet 30 which, in the preferred embodiment, causes a screen button (not shown) to be included in the rendered Web page 26. Activation of the button by the user signals to the applet 30 that the user wishes to engage in a chat session. Upon activation of the button, the applet 30 establishes a connection, or logs on, to the chat server 14 in conventional manner.
The applet 30 also presents the user with a text window (not shown), in conventional manner, in which to create a message e.g. making an enquiry regarding an aspect of said organisation's business. Conveniently, the text window is also arranged to display messages received by the applet 30 via the chat server 14. The GUI provided by the applet 30 presents a second screen button (not shown) to the user, activation of which signals that the user wishes to send his created message to the chat server 14. It will be understood that there are many ways in which the applet 30 could enable a user to send a message to the chat server 14 and the foregoing description is provided by way of example only.

Upon activation of the second screen button by the user, the applet 30 sends the customer message to the chat server 14 together with a request to initiate a chat session, or conference. In accordance with the preferred embodiment of the invention, the applet 30 requests that the proxy agent 20 is party to the chat session. Thus, the applet 30 also provides the chat server 14 with an identifier, or Party ID, identifying the proxy agent 20. The chat server 14 then causes a chat session, or on-line conference, to be initiated that includes the proxy agent 20 and causes the customer message to be sent to the proxy agent 20.

The proxy agent 20 advantageously creates and maintains a database or other suitable storage means containing information relating to each chat session initiated by the chat server 14. A simple representation of suitable storage means is shown in Figure 2a. The storage table hereinafter referred to as the session storage area 32, includes a respective entry 34 for each chat session. The proxy agent 20 assigns a Session identifier (Session ID) to each chat session and creates an entry 34 in the session storage area 32 which entry 34 includes the Session ID and the message itself. In the preferred embodiment, the proxy agent 20 registers the Session ID with the chat server 14 and the chat server 14 then invites the applet 30 to join the chat session.

Preferably, the message is associated with a tag for indicating the source of the message. In the present example, the proxy agent 20 assigns Session ID S1 to the session initiated for the received customer message and associates the message with a tag indicating that the message emanated from the client 16 i.e. from a customer.

The next task of the proxy agent 20 is to cause the received customer message to be classified in order that it may be assigned to a suitable agent (not shown) at an agent client 18. To this end, the proxy server 20 sends the customer message to the classifier 22 together with the respective Session ID.

The classifier 22 is arranged to classify, or categorise, messages with text content. The classifier 22 analyses the text content of a given message and produces a set of one or more results identifying one or more categories into which the classifier 22 deems that the message falls. The classifier 22 is provided with a list of valid categories the number and nature of which depend on the organisation running the system 10. For example, assuming that the organisation is a banking organisation, the list of valid categories may include: mortgage interest rates; loan interest rates; account charges; investment services; pension plans; and so on. A customer may send in a message to the bank requesting information, or placing an order, in respect of one or more of the valid categories. The purpose of the classifier 22 is to determine into which category, or categories, a customer message falls. To do this, the classifier 22 includes, or is associated with, a text analyser (not shown) and a set of rules (not shown). The text analyser applies the rule set (normally by means of a conventional rules engine (not shown)) to the text content of a received customer message.
Depending on which of the rules are satisfied, the classifier 22 asserts that the message belongs in one or more relevant categories. By way of simplistic example, a rule may stipulate that if the word 'mortgage' appears in a received message, then the message is deemed to be an enquiry about mortgage rates and belongs in the mortgage interest rate category. In practice, normally more than one rule needs to be satisfied before the text analyser assigns a category to a message. In some cases the text analyser may generate a list of one or more categories into which it deems the message to belong and associate with each category in the list an indication (e.g. a percentage level) of the level of confidence with which the assignment was made. IBM's Mail Analyser (Trade Mark) is an example of a suitable text analyser for use with the classifier 22.

When a message has been classified, or categorised, the classifier 22 places the message in a queue for distribution to a suitable agent. For this purpose, the system 10 conveniently includes a database or other storage means, hereinafter referred to as distributor control table (DCT) 36 (Figure 2b), for storing information relating to each message awaiting distribution. Each entry 38 of the DCT 36 includes the Session ID and a category identifier. In the preferred embodiment, the category identifier identifies only one category, namely the category that was attributed, by the text analyser, to the message with the highest level of confidence. In the illustrated example it is assumed that there are seven categories, noted as A, B, C, D, E, F and G.

In an alternative embodiment, messages received from the applet 30 may already be classified when they reach the proxy agent in which case the proxy agent does not need to re-classify the message. In such cases, the proxy agent needs only to determine how the message is classified. In general, therefore, the proxy agent is arranged to determine the nature of the message in order that it may cause the message to be rendered by an appropriate agent client.

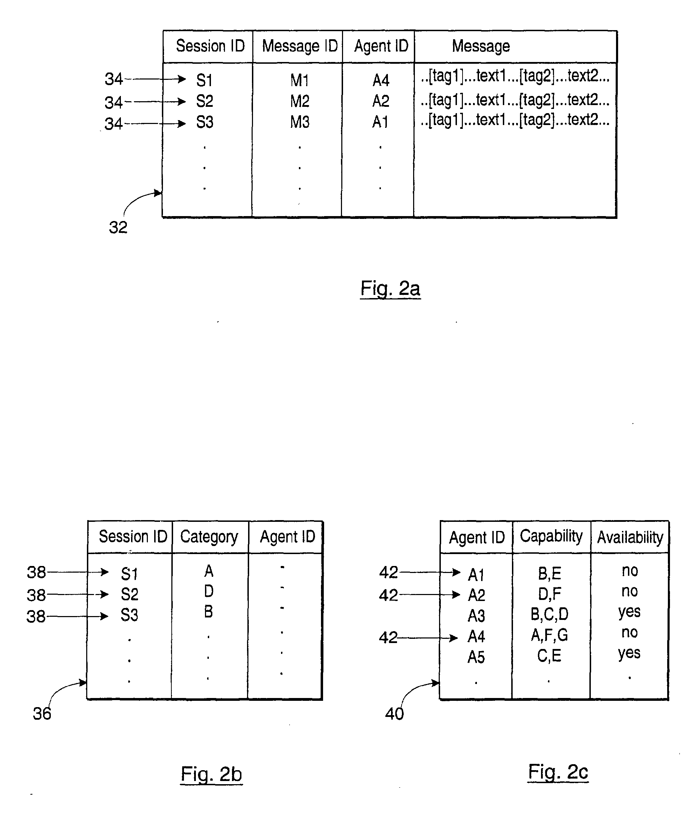

The system 10 further includes a database or other storage means, hereinafter referred to as an agent directory 40 (Figure 2c), which identifies all of the agents available for engaging in chat sessions and gives an indication of their respective skills or capabilities. Each entry 42 in the agent directory 40 includes an agent identifier (Agent ID) and a set of one or more category identifiers i.e. identification of those categories that the respective agent is capable of dealing with (in the "capability" field in Fig, 2c). Preferably, each entry includes an indication of whether or not the agent is currently available (i.e. not otherwise engaged).

The distributor 24 refers to the DCT 36 and selects an entry 38 for processing. The distributor 24 may process the entries 38 in first-come-first-served queue order or may be arranged to implement an alternative distribution policy. When processing an entry 38, the distributor 24 refers to the agent directory 40 and selects an agent who is capable of dealing with messages falling in the category indicated in the selected DCT entry 38 and who is currently available. The distributor 24 signals to the agent client 18 associated with the selected agent that the agent is selected and communicates to the agent client 18 the Session ID included in the selected entry 38.
The selected agent client 18 is arranged to signal to the proxy agent 20 that it has been selected to join with the chat session identified by the communicated Session ID. Typically, this signal to the proxy agent 20 includes the Session ID and the Agent ID. Upon receipt of the signal, the proxy agent 20 causes the agent client 18 to join the chat session. Preferably, the proxy agent 20 causes the agent client 18 to join the chat session by sending a signal to the chat server 14 that includes the Agent ID and the Session ID. With the Lotus SAMETIME chat server this is conveniently achieved using a Join Session function provided by the API. The chat server 14 then causes the agent client 18 associated with the Agent ID to join the chat session identified by the Session ID (in the preferred embodiment there is a one-to-one correspondence between Agent IDs and agent clients 18). The agent client 18 then joins the chat session in conventional manner.

The proxy agent 20 updates the session storage area 32 to include information concerning the agent who has been assigned to the chat session (in "Agent ID" field in Fig. 2a). By way of example, and with reference to Figures 2a to 2c, the session storage area 32 shows three entries 34 relating respectively to chat sessions S1, S2 and S3.
From the DCT table 36, it can be seen that sessions S1, S2 and S3 have been deemed to belong to categories A, D and B respectively. From agent directory 40, it can be seen that agent A4 is capable of dealing with category A messages, agents A2 and A3 are capable of dealing with category D messages and agents A1 and A3 are capable of dealing with category B messages. In the example, it is assumed that agent A4 is selected to deal with session S1, agent A2 with session S2 and agent A1 with session S3. These agent assignments are recorded in the respective entries 34 for S1, S2 and S3 in the session storage area 32. Accordingly, the agent directory 40 indicates that agents A1, A2 and A4 are not available as they are currently engaged in their respective chat sessions.

Once the selected agent client 18 joins the chat session, the proxy agent 20 causes the relevant customer message to be sent to the agent client 18. Conveniently, this is achieved by retrieving the message text from the respective entry in the session storage area 32 and sending the retrieved message to the chat server 14 together with the associated Session ID. When the chat server 14 receives the message and the associated Session ID, it sends, in accordance with its normal mode of operation, the message to all clients that are party to the identified chat session. By way of example, for chat session S1, the proxy agent 20 retrieves from the session storage area 32 the customer message stored in association with the S1 entry 34 and sends it to the chat server 14 together with the session ID S1. Upon receipt of same, the chat server 14 sends the customer message to the agent client 18 associated with agent A4 since said agent client 18 is party to session S1. The agent client 18 then renders the message to its agent, namely agent A4.

The agent, in this example agent A4, operating from the agent client 18 deals with the rendered customer message typically by creating a text response in a response window (not shown) provided by the agent client 18. The agent indicates to the agent client 18 when the agent response message is completed and the agent client 18 sends the response message to the chat server 14 together with the relevant session ID.

Upon receipt of same, and in accordance with its normal mode of operation, the chat server 14 sends the agent response message to each client that is party to the identified session. In the present example, the chat server 14 sends the response message to the proxy agent 20 and to the applet 30 at the customer client 16 from which the original customer message emanated.

The proxy agent 20 advantageously stores the agent response message in the session storage area 32. Preferably, the agent response message is concatenated with the original customer message in the relevant session entry 34. It is also preferred that each message segment held in the session storage area 32 is associated with a respective tag for identifying from where the message segment originated. For example, in the 'Message' field of Figure 2a, *tag1* may indicate that *text1* is a customer message while *tag2* indicates that *text2* is an agent reply, and so on.

The applet 30 is arranged to render the received agent response message to the customer, or user, at the customer client 16. The customer may then have a further query or order to make in respect of the same topic or in relation to a different topic. The customer creates a new message and the applet 30 sends the new customer message to the chat server 14 destined for the chat session (identified by Session ID). Upon receipt of same, the chat server 14 sends the new customer message to all clients that are party to the identified session. In the present example, the new customer message is sent to both the proxy agent 20 and the agent client 18.

The proxy agent 20 stores the new customer message in the appropriate entry 34 of the session storage area 32 preferably together with a tag indicating that it emanated from the customer. The proxy agent 20 then sends the new message to the classifier 22, together with the Session ID and the Agent ID of the agent who dealt with the original customer message. The classifier 22 causes the new customer message to be subjected to classification by text analysis as described above. When classification is complete, the classifier 22 updates the DCT entry 38 for the given Session ID. In particular, if the new customer message is deemed to belong to a different category than the original customer message, then the category information in the DCT entry 38 is updated to indicate the newly determined category. Further, the classifier 22 associates the Agent ID that was passed to it by the proxy server 20 with the DCT entry 38. Preferably, therefore, each DCT entry 38 includes an Agent ID field (Figure 2b).

When the distributor 24 processes a DCT entry 38 which includes an Agent ID, it refers to the agent directory 40 to determine if the agent identified by the Agent ID is capable of dealing with the category indicated in that DCT entry 38. If so, then the distributor 24 signals to the proxy agent 20 that the current agent, as identified by the Agent ID in the DCT entry 38, can continue to participate in the chat session, as identified by the Session ID in the DCT entry 38. If not, then the distributor 40 must revert to the agent directory 40 and select an alternative agent who is able to deal with the new category and who is available.

In signalling to the proxy server 20 that the current agent is still capable of dealing with the session, the distributor 24 sends the Session ID to the proxy server 20. Using said Session ID as a reference to the session storage area 32, the proxy server 20 then sends the new customer message to the chat server 14. The chat server 14 sends the new customer message to those clients that are party to the relevant chat session, including the agent client 18 at which the original customer message was dealt with. For example, in session S1, the current, or original agent, is A4. If the new customer message in S1 is deemed to fall (with the highest level of confidence) into any one of categories A, F or G, then agent A4 can continue to deal with session S1. When the proxy agent sends the new customer message to the chat server 14, the message is subsequently received by the A4 agent client 18.

If the distributor 24 deems that a change of agent is required (i.e. if the new customer message is deemed to fall within a category other than A, F or G), the distributor 24 selects and informs an alternative agent in the same manner as described above. The selected alternative agent signals its selection to the proxy agent 20 as described above. The proxy agent 20 recognises, with reference to the relevant entry 34 in the session storage area 32, that there has been a change in selected agent. The proxy agent 20 causes the current agent client 18 to leave the chat session. Conveniently, the proxy agent 20 achieves this via the chat server 14 and the standard API provided thereby. The proxy agent 20 then causes the agent client 18 associated with the selected alternative agent to join the session as described above. For example, if the new customer message is recorded in the DCT 36 as belonging to category C, then the current agent, A4, is no longer suitable for participating in chat session S1. The distributor 24 may therefore select agent A5 as an alternative agent since agent A5 can deal with category C and is available. Thus, the proxy server 20 causes the agent client associated with agent A4 to leave session S1 and causes the agent client 18 associated with agent A5 to join session S1. The proxy server 20 updates the relevant entry in the session storage area 32 to record the new agent participating in the session.

The newly selected agent then deals with the new customer message as described above and the process repeats until the applet 30 determines that the customer does not wish to create any further messages. Upon determination of same, the applet 30 signals to the chat server 14 to cause the session to be terminated. The applet 30, the proxy agent 20 and the relevant agent client 18 terminate in respect of the session. This is conveniently achieved using standard API functions provided by the chat server 14.

Hence, the system 10 is able to distribute or route customer chat messages to an agent who has the ability to deal with the customer's message, e.g. query or order. Further, should the subject of the customer's query or order change during the course of a chat session, the system 10 is able to route, or assign, the chat session to an alternative agent if necessary. The customer can therefore communicate with one or more agents (as necessary), substantially in real-time, concerning a broad range of topics. The likelihood of a customer making a query or order which cannot be dealt with by the system 10 in real-time (i.e. in the course of a normal chat session) is thus greatly reduced. If desired, the transition from one agent to another is seamless to the customer in that he is unaware that he is communicating with a different agent. Alternatively, each agent client 18 may include a respective signature with their response message(s).

In a preferred embodiment, the system 10 employs a flag system to control the rendering of messages to customers/users and agents. In particular, each message is associated with a first flag (status flag), which approves or authenticates a message for rendering to a customer/agent, and a second flag (source flag), which indicates the source of the message. In the embodiment described above, the status flag can be set to 'approve' or 'unapproved' while the source flag can be set to 'customer' or 'agent'. The applet 30 is arranged to set the status flag to 'unapproved' and the source flag to 'customer', whenever it sends a customer message to the chat server 14. The applet 30 is arranged only to render, to its respective customer, messages for which the status flag is set to 'approve' and for which the source flag is set to 'agent'. When the proxy agent 20 sends a customer message to the chat server 14 for sending to a selected agent, the applet 30 also receives (in accordance with the normal operation of the chat server) the customer message. However, the applet 30 does not render the message to the customer since the source flag indicates that the received message emanated from the customer. Conveniently, the status and source flags are included in respective fields in respective entries 34 of the session storage area 32 (not shown in Fig. 2a).

In one embodiment, the agent client 18 is arranged to set the status flag to 'approve' and the source flag to 'agent', whenever it sends an agent response message to the chat server 14. The agent client 18 is further arranged to render messages to its respective agent only when the status flag is set to 'approve' and the source flag is set to 'customer'. In this embodiment, when an agent response message is sent to the chat server 14 and subsequently reaches the applet 30, the applet 30 renders the response message to the customer. However, when the customer sends a new message to the chat server 14 and it is relayed directly to the agent client 18, the agent client 18 does not render the customer message to its agent since the status flag is set to 'unapproved'. It is up to the proxy agent 20 to approve the customer message before it is rendered to the agent. Thus the proxy agent 20 sets the status flag to 'approve' whenever it sends a message to the chat server 14 for transmittal to an agent. When the approved message is received by the agent client 18, it is rendered to the agent.

In an alternative embodiment, the proxy agent is arranged to perform an additional task of approving agent response messages before they are rendered to a customer. For example, the proxy agent may be arranged to cause agent response messages to be checked for profanities. In such an embodiment, the proxy agent is associated with a checking module (not shown) for analysing the text of the agent response message. When an agent client sends a response message to the chat server 14, the status flag is set to 'unapproved'. The unapproved message is sent to both the proxy server 20 and to the customer applet, as usual. However, the customer applet does not render the response message to its customer since the status flag is set to 'unapproved'. The proxy agent send the unapproved response message to the checking module and sets the status flag to 'approve' only when the checking module indicates that the agent response message is suitable for rendering to a customer. When an agent response message is so approved, the proxy agent sends the approved response message to the chat server 14 whereupon it is sent to both the applet on the customer client and to the agent client. The agent client does not render the approved message to its agent since the source flag indicates that the message emanated from the agent himself. The customer applet does render the response message to its customer since the message is now approved.

It will be appreciated from the foregoing descriptions of the invention that the proxy agent serves as a buffer or screening module between the customers and the agents. Messages emanating from the customers are screened or processed by the proxy server to ensure, as far as possible, that they are sent to a suitable agent. Optionally, messages sent from the agents to the customers are screened or processed by the proxy server to ensure that they are suitable for sending to the customers. The use of a flag system is advantageous where the chat server is arranged, as a normal mode of operation, to automatically send messages that it receives to all clients that are party to a chat session. Flags may be used to control whether or not a message is rendered to a customer or agent.

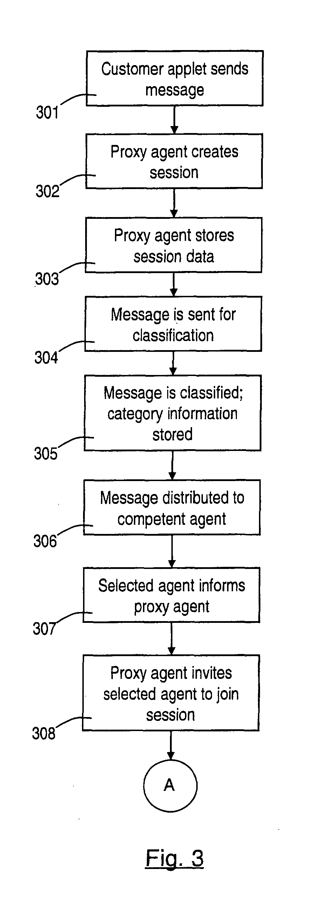

Figures 3 to 6 illustrate, in flow diagram form, the operation of a preferred embodiment of the system 10. Referring to Figure 3, in stage 301, the applet 30 forwards a chat session request and the first message text to the proxy agent 20 via the chat server 14. The applet 30 sets the source flag to 'customer' and the status flag is set to 'unapproved'.

In stage 302, the proxy agent 20 creates a Session ID and registers it with the chat server 14 thereby creating a session, or conference. The chat server 14 is then used to invite the customer applet 30 to join the session.

In stage 303, the proxy agent 20 stores the Session ID, source flag, status flag and message text internally. In stage 304, the proxy agent 20 sends the message text to the classifier 22 and indicates the Session ID.

In stage 305, the classifier 22 analyses the message text and picks the category with the highest confidence level. This category information is stored with the Session ID in table 32.

In stage 306, the distributor 24 picks up the relevant category information, selects an appropriately skilled agent and informs the corresponding agent client 18, indicating the Session ID.

In stage 307, the selected agent client 18 informs the proxy agent 20 that it has been selected, and passes the Session ID and Agent ID.

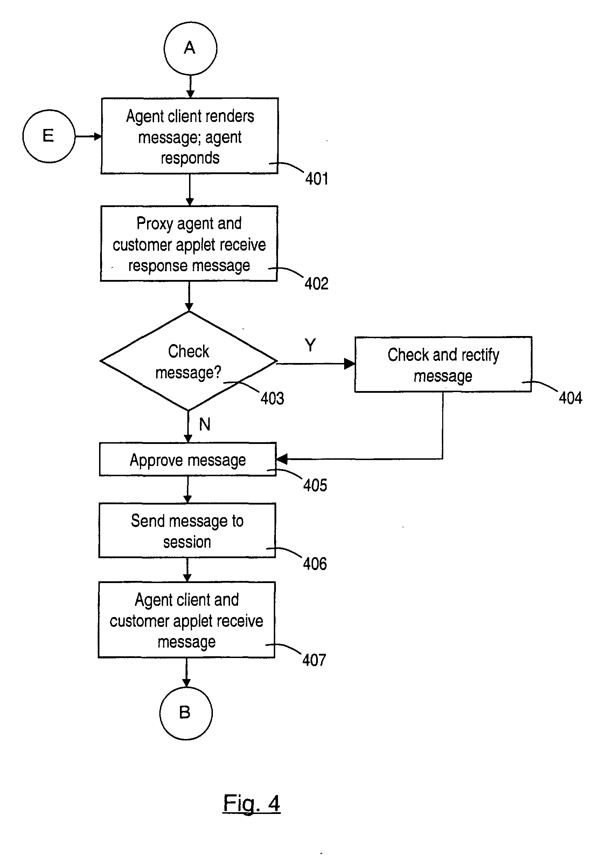

In stage 308, the proxy agent 20 invites the agent client 18 to join the session using the chat server 14. The chat server 14 is also used to send the first message to the selected agent client 18, with the source flag set to 'customer' and the status flag set to 'approved'. The proxy agent 20 saves the Agent ID internally. The next stage is stage 401 (Fig. 4).

Referring now to Figure 4, in stage 401, the agent client 18 stores and displays (renders) the message to its user (human agent, not shown). The user composes a response which is subsequently sent to the session using the chat server 14, with the source flag set to 'agent' and the status flag set to 'unapproved'.

In stage 402, both the proxy agent 20 and customer applet 30 receive the message via the chat server 14 but the customer applet 30 ignores it since it is unapproved.

In stage 403, the proxy agent 20 checks if the outbound message checking option is selected. If not, the proxy agent 20 approves the message and stores it internally setting the source flag to 'agent' and the status to 'approved' (stage 405). If the checking option is selected, the message is subjected to a checking process by which the message is rectified if necessary (stage 404). After checking, control returns to the proxy agent 20 in stage 405.

In stage 406, the proxy agent 20 sends the message to the session using the chat server 14.

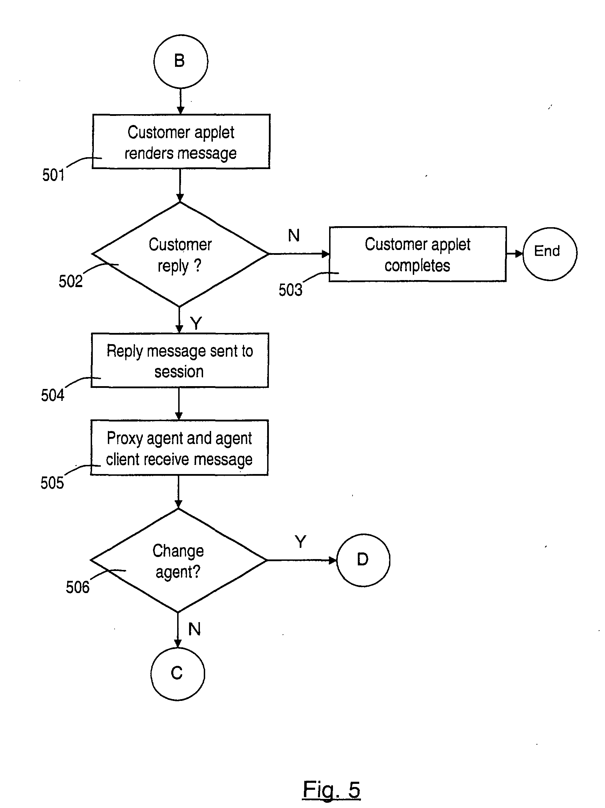

In stage 407, both the agent client 18 and customer applet 18 receive the message via the chat server 14 but the agent client 18 ignores it since the source flag is set to 'agent'. The next stage is stage 501 (Fig. 5).

Referring now to Figure 5, in stage 501, the customer applet 30 displays (renders) the message to the customer and stores the text internally.

In stage 502, the applet 30 checks if the customer typed a reply to the agent's response. If not, then the customer applet 30 completes, causing both the proxy agent 20 and the client agent 18 applet to tidy up and complete also (stage 503). The session, or conference, is thus ended.

If the customer applet 30 detects that the customer did make a reply, the applet 30 sends the message text to the session through the chat server 14. The source flag is set to 'customer' and the status flag is set to 'unapproved' (stage 504).

In stage 505, both the proxy agent 20 and agent client 18 receive the message via the chat server 14 but the agent client 18 ignores it since it is unapproved.

In stage 506, the proxy agent 20 checks if the dynamic classification and routing option is selected i.e. whether it needs to cause the customer's reply to be analysed (classified) and, if necessary, select an alternative agent to deal with the customer's reply message.

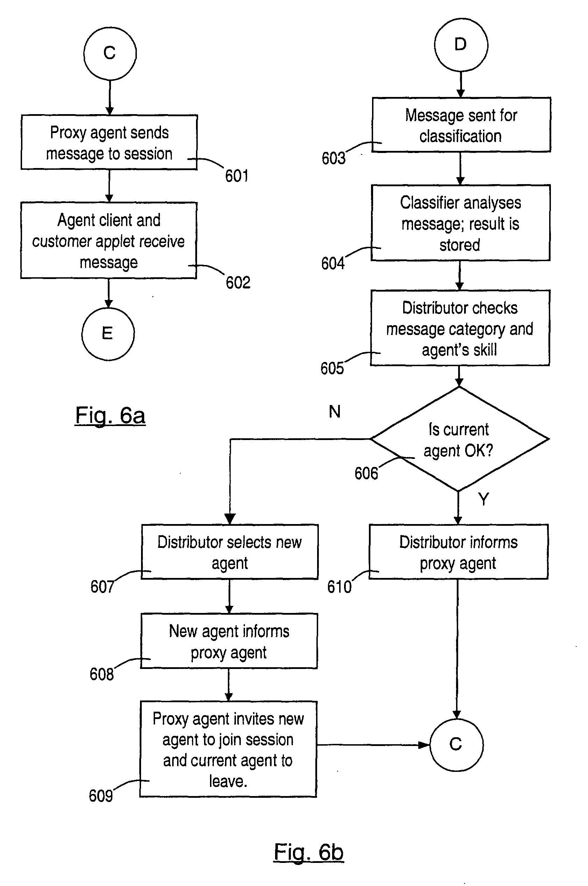

If this option is not selected, then the proxy agent 20 sends the customer's reply message to the session, with the source flag set to 'customer' and the status flag set to 'approved', using the chat server 14 (stage 601, Fig. 6a). Then, in stage 602, both the agent client 18 and customer applet 30 receive the message via the chat server 14 but the customer applet 30 ignores it since it has a source of 'customer'. Control then passes to the agent client 18 in stage 401 (Fig. 4).

If dynamic classification and routing is selected, then in stage 603 (Fig. 6b), the proxy agent 20 sends the message text to the classifier 22 and indicates the Session ID and current Agent ID.

In stage 604, the classifier 22 analyses the message text and picks the category with the highest confidence level. This category information (which may also be considered to be message routing information) is stored with the Session ID and Agent ID (Fig. 2b).

In stage 605, the distributor 24 picks up the category information and checks the skills of the currently selected agent.

In stage 606, if the distributor 24 determines that the current agent is not capable of dealing with the customer's reply message, then the distributor 24 proceeds to stage 607. In stage 607, the distributor 24 selects an appropriately skilled agent and informs the corresponding agent client 18, indicating the Session ID.

In stage 608, the newly selected agent client 18 informs the proxy agent 20 that it has been selected, and passes the Session ID and Agent ID.

In stage 609, the proxy agent 20 invites the current session agent client 18 to leave the session and invites the new selected agent client 18 to join the session, using the chat server 14. The proxy agent 20 also updates its internal data to reflect this change in agent client 18.

If, in stage 606, the distributor determines that the current agent is competent to deal with the customer's reply message, the distributor 24 informs the proxy agent 20 that the current agent is still appropriate for the session, passing the Session ID (stage 610).

After stages 609 or 610, control remains with, or returns to, the proxy agent at stage 601.

The invention is not limited to the embodiments described herein which maybe modified or varied without departing from the scope of the invention.

## Claims

1. A control module for use in a computer chat system (10) which includes one or more first chat clients (16); one or more second chat clients (18); and a chat server (14) arranged to establish an on-line conference between a first chat client (16) and at least one second chat client (18), by which conference said chat clients (16, 18) may exchange messages for rendering to respective client users, the control module being arranged to participate in said conference in order to receive messages from said chat clients, wherein upon receipt of a message from a first chat client (16), the control module is arranged to cause said received message to be analysed in order to determine the nature of the message, and is further arranged to cause a second chat client (18) to be selected depending on said determined nature and to cause said message to be rendered by said selected second chat client.

2. A control module as claimed in Claim 1, wherein in respect of a first message received from a first chat client, the control module is arranged to cause said selected second chat client to join the conference and, in respect of the, or each, subsequent message received from said first chat client in respect of said conference, the control module is arranged to cause said subsequently received message to be analysed in order to determine the nature of the message, and to cause an alternative second chat client to be selected if the subsequently received message is not suitable for rendering by the currently selected second chat client.

3. A control module as claimed in Claim 2, further arranged to cause a selected alternative second chat client to join the conference and to cause said selected second chat client to leave the conference.

4. A control module as claimed in any preceding claim, arranged to cause messages received from said first chat clients to be classified, according to message content, into at least one of a set of message categories, wherein a second chat client is selected depending on the, or each, category into which a message is classified.

5. A control module as claimed in Claim 4, associated with a text analyser arranged to apply a set of one or more rules to the message content in order to produce said at least one message category.

6. A control module as claimed in any preceding claim, further arranged to receive messages sent from said second chat clients, wherein, upon receipt of a message from a selected client, the control module is arranged to cause said received message to be analysed in order to determine its suitability for rendering by a first chat client and, upon determining that said message is suitable, to cause at least one first chat client to render the message.

7. A control module as claimed in Claim 6, wherein the control module causes the received message from said second chat client to undergo text analysis in order to detect words or phrases that are unsuitable for rendering by said at least one first chat client.

8. A control module as claimed in any preceding claim, wherein the control module is arranged to participate in the on-line conference as a further chat client.

9. A control module as claimed in any preceding claim, wherein each message is associated with a first flag for indicating whether or not the associated message is suitable for rendering by a chat client, wherein the control module is arranged to set the first flag to indicate approval for rendering.

10. A computer chat system including one or more first chat clients; one or more second chat clients; and a chat server arranged to establish an on-line conference between a first chat client and at least one second chat client, by which conference said chat clients may exchange messages for rendering to respective client users, the computer chat system further comprising a control module as claimed in Claim 1.

11. A computer chat system as claimed in Claim 10, wherein each second chat client is associated with one or more message categories such that messages falling into at least one of said one or more message categories are appropriate for rendering by the respective second chat client.

12. A computer chat system as claimed in Claim 11, wherein the or each message category associated with a second chat client are dependant on the skills of the respective client user.

13. A computer chat system as claimed in any of claims 10 to 12, wherein messages are associated with a second flag arranged to indicate the source the message and wherein the first and second chat clients are arranged only to render messages for which the associated second flag indicates that the message source is a second or first chat client respectively.

14. A computer chat system as claimed in any of claims 10 to 13, wherein said second chat clients are arranged only to render messages in respect of which the associated first flag indicates approval for rendering.

15. A computer chat system as claimed in any of claims 10 to 14, wherein said first chat clients are arranged only to render messages in respect of which the associated first flag indicates approval for rendering.

16. A computer chat system as claimed in any of claims 10 to 15, further including a text analyser arranged to apply a set of one or more rules to the message text in order to produce said at least one message category.

17. A computer chat system as claimed in any of claims 10 to 16, wherein said on-line conference is established across the Internet or other global computer network.

18. In a computer chat system including one or more first chat clients; one or more second chat clients; and a chat server arranged to establish an on-line conference between a first chat client and at least one second chat client, by which conference said chat clients may exchange messages for rendering to respective client users, a method of on-line network communications comprising: receiving a message from a first chat client, causing said received message to be analysed in order to determine the nature of the message; causing a second chat client to be selected depending on said determined nature; and causing said message to be rendered by said selected second chat client.

19. A computer program product comprising computer usable code stored on a computer usable medium and arranged to implement, when executed on a computer, a control module as claimed in claim 1.

20. A set of one or more computer program products comprising computer usable code stored on a computer usable medium and arranged to implement, when executed on a computer, a computer chat system as claimed in Claim 10.

21. A computer program product comprising computer usable code stored on a computer usable medium and arranged to perform, when executed on a computer, a method as claimed in Claim 18.
